(19) Europäisches Patentamt
European Patent Office
Office européen des brevets

(11) Numéro de publication: 0 131 523
B1

(12) # FASCICULE DE BREVET EUROPÉEN

(45) Date de publication du fascicule du brevet: **13.01.88**

(51) Int. Cl.⁴: **B 32 B 17/10**

(21) Numéro de dépôt: **84401464.7**

(22) Date de dépôt: **10.07.84**

(54) **Vitrage feuilleté de sécurité.**

(30) Priorité: **11.07.83 FR 8311507**

(43) Date de publication de la demande: **16.01.85 Bulletin 85/3**

(45) Mention de la délivrance du brevet: **13.01.88 Bulletin 88/2**

(84) Etats contractants désignés: **AT BE CH DE FR GB IT LI LU NL SE**

(56) Documents cité:
**EP-A-0 054 491**
**DE-A-3 135 672**
**FR-A-2 385 751**
**FR-A-2 398 606**
**FR-A-2 442 128**
**GB-A-2 074 940**
**US-A-4 103 070**

(73) Titulaire: **SAINT- GOBAIN VITRAGE, Les Miroirs 18, avenue d'Alsace, F-92400 Courbevoie (FR)**

(72) Inventeur: **Bravet, Jean- Louis, 5 avenue du Moulin, F-60150 Thourotte (FR)**
Inventeur: **Colmon, Daniel, 6 rue du colonel Fabien, F-60150 Thourotte (FR)**
Inventeur: **Daude Gérard, 11 rue rené Voisin, F-33140 Villeneuve D'oron (FR)**
Inventeur: **Moncheaux, Michel- Jean, 9 rue des Sablons, F-60200 Compiègne (FR)**

(74) Mandataire: **Muller, René, SAINT- GOBAIN RECHERCHE 39, quai Lucien Lefranc, F-93304 Aubervilliers (FR)**

EP 0 131 523 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

L'invention concerne un nouveau vitrage feuilleté comprenant une feuille de verre et une couche unique de matière plastique.

Les vitrages feuilletés dits de sécurité se composent généralement de deux feuilles de verre et d'une couche intercalaire ayant des propriétés d'absorbeur d'énergie généralement en polyvinylbutyral. Un des inconvénients de ce type de vitrage feuilleté lorsqu'il est utilisé en tant que pare-brise de véhicule, est qu'en cas d'impact de la tête de l'occupant du véhicule, les arêtes de la feuille de verre intérieur brisée peuvent provoquer des lacérations et autres blessures. C'est pourquoi on a proposé par exemple dans les publications de brevet français 2 187 719 et 2 251 608 d'appliquer sur cette feuille de verre intérieure une feuille de matière plastique formée essentiellement d'un polyuréthane thermodurcissable qui présente des propriétés d'antilacération. En outre cette feuille de matière plastique est autocicatrisable c'est-à-dire c'est une matière de laquelle des éraflures superficielles ou des impressions locales disparaissent rapidement, la vitesse de disparition étant fonction de la nature de l'éraflure et de la température de la matière plastique.

On a également proposé par exemple dans la publication de brevet français 2 398 606 un vitrage feuilleté comprenant une feuille de verre, une couche thermoplastique ayant des propriétés d'absorbeur d' énergie et une couche de revêtement autocicatrisable et résistant à la rayure formée essentiellement d'un polyuréthane thermodurcissable. Dans ce type de vitrage, chacune des couches remplit une fonction déterminée, la couche thermoplastique remplissant essentiellement la fonction d'absorbeur d'énergie mais n'étant pas suffisamment résistante à l'abrasion ou aux agents extérieurs, la couche de revêtement remplissant la fonction de protection de la couche absorbeur d'énergie et ne présentant par contre pas de bonnes propriétés d'absorption d'énergie.

Il a déjà été suggéré par exemple dans les publications de brevet US-3 509 015 ou US-3 808 077 des vitrages feuilletés comprenant une feuille de verre et une couche unique de matière plastique ayant des propriétés d'absorbeur d'énergie. Ce type de vitrage n'a semble-t-il jamais donné entière satisfaction, à cause sans doute d'une résistance insuffisante à l'abrasion et à la rayure de la couche de matière plastique utilisée en tant que couche externe.

Il est admis d'une manière générale qu'une structure de vitrage feuilleté comprenant une couche de matière plastique unique ayant à la fois des propriétés d'absorbeur d'énergie et une bonne résistance à la rayure et aux attaques des agents extérieurs était peu probable de donner satisfaction. En effet, pour l'homme de métier il existe une certaine incompatibilité entre les fonctions d'absorbeur d'énergie et de résistance à la rayure que pourrait remplir une même couche. Pour qu'une couche présente des propriétés d'absorption d'énergie il est admis qu'elle doit présenter un caractère essentiellement thermoplastique. Par contre pour qu'une couche possède une bonne résistance à la rayure il est également admis qu'elle doit présenter un caractère essentiellement thermodurcissable avec une structure réticulée. Ces propriétés mécaniques liées eu caractère thermoplastique ou thermodurcissable sont décrites par exemple dans les publications de brevet français 2 398 606 et européen 0 054 491.

On a maintenant trouvé une couche unique de matière plastique qui dans une structure de vitrage feuilleté où elle est associée à une feuille de verre remplit la fonction d'absorbeur d'énergie, de protection contre les éclats de verre, et qui en outre présente une bonne résistance à l'abrasion et à la rayure ainsi qu'aux différentes attaques des agents extérieurs.

La couche selon l'invention et telle que revendiquée dans la publication EP-A- 133 090 déposée le même jour par la demanderesse, est formée dans un processus en continu par coulée réactive, sur un support plan horizontal duquel elle est détachable, d'un mélange réactionnel d'un composant isocyanate et d'un composant à hydrogène actifs notamment un composant polyol, le composant isocyanste comprenant au moins un diisocyanate aliphatique, cycloaliphatique, ou un prépolymère de diisocyanate, ce composant ayant une viscosité mesurée à 40° C inférieure à environ 5 Pas, le composant polyol comprenant au moins un polyol long difonctionnel de masse moléculaire comprise entre 500 et 4000 et au moins un diol court en tant qu'agent d'allongement de chaîne.

Par coulée réactive on entend la coulée sous forme d'une couche ou d'un film d'un mélange liquide des composants à l'état de monomères ou de prépolymères, suivie d'une polymérisation de ce mélange par la chaleur. Cette coulée réactive qui fournit à la couche bes bonnes propriétés méchniques et optiques sera décrite plus complètement dans la suite de la description.

Les proportions des composants du polyuréthane sont choisies pour obtenir de préférence un système stoechiométriquement équilibré, c'est-à-dire que le rapport des groupements équivalents NCO apportés par le composant diisocyanate aux groupements équivalents OH apportés par le composant polyol, c'est-à-dire le ou les polyols longs et le ou les diols courts est de l'ordre de 1. Lorsque le rapport NCO/OH est inférieur à 1, plus il décroît et plus les propriétés mécaniques recherchées pour l'application deviennent rapidement peu satisfaisantes. Lorsque tous les composants du polyuréthane sont difonctionnels, la limite inférieure de rapport NCO/OH pour l'obtention de proprétés mécaniques satisfaisantes se situe à 0,9 environ. Lorsqu'un des composants au moins est trifonctionnel cette limite inférieure peut être

baissée jusqu'à environ 0,8. Lorsque le rapport NCO/OH est supérieur à 1, plus il croît et plus certaines propriétés mécaniques de la couche obtenue par coulée réactive sont renforcées, par exemple la couche devient plus rigide mais étant donné le coût plus élevé du composant isocyanate par rapport à celui du composant polyol, le choix d'un rapport NCO/OH sensiblement égal à 1 est un bon compromis entre les propriétés obtenues et le coût.

Les proportions entre le polyol long et le diol court peuvent varier en fonction des propriétés désirées comme indiqué par la suite, le nombre des groupements équivalents OH dus au diol court représentant cependant généralement de 20 à 70 % des groupements équivalents totaux du mélange formant le composant polyol dans le cas où le rapport des groupements OH est de l'ordre de 1. Lorsqu'on augmente la proportion du diol court on durcit la couche et on augmente généralement son module.

Les diisocyanantes convenables utilisée dans le cadre de l'invention sont choisis notamment parmi les isocyanates difonctionnels aliphatiques suivants: hexaméthylènediisocyanate (HMDI), 2,2,4-triméthyl 1,6-hexanediisocyanate (TMDI), bis 4-isocyanatocyclohexylméthane (Hylène W) (marque déposée), bis 3-méthyl-4-isocyanatocyclohexylméthane, 2,2 bis- (4-isocyanatocyclohexyl) propane, 3-isocyanatométhyl-3,5,5 triméthylcyclohexylisocyanate (IPDI), m-xylylènediisocyanate (XDI); m- et p-tétraméthylxylylènedi-isocyanate (m- et p-TMXDI), trans-cyclohexane-1,4 diisocyanate (CHDI), 1,3 -(diisocyanatométhyl)- cyclohexane (XDI hydrogéné).

On utilise de préférence de l'IPDI notamment pour des raisons de prix de revient.

Selon le premier aspect de l'invention, on utilise un composant isocyanate contenant des fonctions urées. Ces fonctions d'urée peut représenter jusqu'à environ 10 % du poids total du composant isocyanate à functions urées. De préférence, le taux d'urée est compris entre 5 et 7 % du poids total dudit composant. Pour la raison invoquée précédemment, on utilise de préférence du 3-isocyanatométhyl-3,5,5-triméthylcyclohyxylisocyanate comportant des fonctions urées (IPDI et dérivé).

Les plyols longs convenables sont choisis parmi des polyétherdiols ou des polyesterdiols de masse moléculaire 500 - 4000; les polyesterdiols étant les produits d'estérification d'un diacide tel que l'acide adipique, succinique, palmitique, azelaïque, sébacique, ophtalique, et d'un diol tel un éthylèneglycol, propanediol - 1,3, butanediol - 1,4, hexanediol- 1,6, les polyétherdiols de formule générale

$$H\text{-}[O\ (CH_2)_n\text{-}]_m\ OH$$

avec n = 2 à 6; m tel que la masse moléculaire soit situeée dans l'intervalle 500 - 4000, ou les polyétherdiols de formule générale:

$$H \left[ O\underset{}{\overset{CH_3}{\overset{|}{CH}}} - CH_2 \right]_m OH$$

avec m tel que la masse moléculaire soit située également dans l'intervalle 500 - 4000. On peut encore utiliser des polycaprolactonediols.

On utilise de préférence un polytétraméthylèneglycol (n = 4) de masse moléculaire environ égale à 1000.

Les agents d'allongement de chaînes convenables sont des diols courts tels que les: éthylèneglycol, propanediol-1,2, propanediol-1,3, butanediol-1,2, -1,3, -1,4, diméthyl-2,2-propanediol-1,3 (néopentylglycol), pentanediol-1,5, hexanediol-1,6, octanediol-1,8, décanediol-1,10, dodécanediol-1,12, cyclohexanediméthanol, bisphénol A, méthyl-2 pentanediol-2,4, méthyl-3 pentanediol- 2,4, éthyl- 2 hexane-diol-1,3, triméthyl-2,2,4-pentanediol-1,3, diéthylèneglycol, triéthylèneglycol, tétraéthylèneglycol, butyne-2-diol-1,4, butènediol-1,4 et décynediol substitués et/ou éthérifiés, hydroquinone-bis-hydroxyéthyléther, bisphénol A éthérifiés par deux ou quatre groupes d'oxyde de propylène, acide diméthylolpropionique. En général plus le diol est court, plus la couche est dure.

On utilise de préférence le butanediol-1,4 qui est un bon compromis pour l'obtention d'une couche ni trop dure, ni trop souple, que l'on recherche pour ce type d'application.

Une des caractéristiques de la couche selon l'invention est qu'elle est obtenue par coulée réactive sur un support plan horisontal, cette coulée réactive déjà décrite dans la publication de brevet français 2 442 128 pour l'obtention d'un couche de polyuréthane thermodurcissable à partir d'un mélange de composants trifonctionnels fournit, de façon surprenante, selon l'invention dans le cas de composants de départ difonctionnels, une couche qui n'est pas entièrement thermoplastique lorsque le rapport des groupements NCO/OH est sensiblement égal ou supérieur à 1.

La coulée réactive implique une réaction de polymérisation rapide pour que la couche soit formée en des temps compatibles avec une fabrication industrielle. Ceci nécessite une température élevée, de l'ordre de 100 à 140° C environ, température à laquelle, des réactions secondaires de ramification se produisent créant par exemple des groupements allophanates et ou biurets entre les chaînes d'uréthane, telles que:

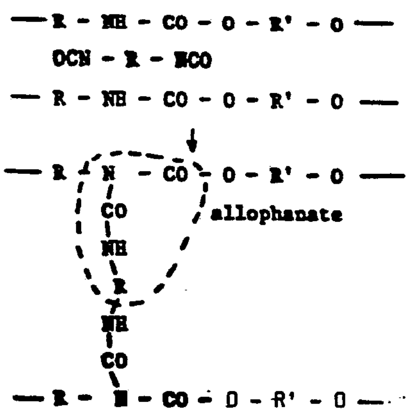


ou

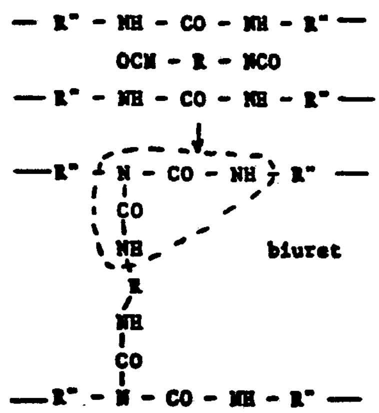


Dans ces conditions opératoires, mêmes avec des composants difonctionnels, lorsque le rapport NCO/OH est sensiblement égal ou supérieur à 1, comme indiqué précédement, le produit obtenu n'est pas complètement thermoplastique; en effet, il est infusible et insoluble dans la plupart des solvants des polpyréthanes tel que le tétrahydrofurane, le diméthylformamide. Ceci ne présente pas d'inconvénient, car la couche est déjà forme; au contraire on en tire comme avantage des propriétés mécaniques améliorées pour la couche en ce qui concerne notamment la contrainte au seuil d'écoulement $\sigma_y$, la contrainte à la rupture $\sigma_R$, l'allongement à la rupture $\varepsilon_R$, la résistance à la déchirure amorcée $R_a$, la résistance à la rayure mesurée au test Ericksen comme décrit par la suite, ou encore la résistance à l'abrasion, par rapport à un système équivalent polymérisé à basse température où seule une polycondensation linéaire se produit.

Lorsque le rapport NCO/OH est inférieur à 1 et de l'ordre de 0,8 à 0,9, une réticulation du type décrit ci-dessus ne se produit que de façon insignifiante.

Selon le deuxième aspect de la réalisation de la couche de polyuréthane selon l'invention le composant polyol contient une faible proportion d'au moins un polyol de fonctionnalilté supérieure à deux et notamment des triols aliphatiques monomères tels le glycérol, le triméthylolpropane, des triols à chaînes polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3. L'ajout d'un polyol de fonctionnalité supérieure à 2 provoque des liaisons de pontage supplémentaires entre les chaînes du polyuréthane et peut ainsi encore améliorer la cohésion de la couche.

Les proportions entre le polyol long le diol court et éventuellement le polyol de fonctionnalité supérieure à 2 peuvent varier selon les propriétés désirées. On choisit généralement des proportions telles que pour 1 équivalent hydroxyle le polyol long représente environ de 0,30 à 0,45 équivalent le diol court d'environ 0,2 à 0,7 équivalent et le polyol de fonctionnalité supérieure à 2 environ 0 à 0,35 équivalent. Dans ces conditions, le couche présente les caractéristiques mécaniques suivantes mesurées suivant les normes AFNOR/NFT 46.002, 51 034 et 54 108.

- une contrainte au seuil d'écoulement $\sigma_y$ à -20° C inférieure ou égale à 3 daN/mm$^2$,
- une contrainte à la rupture $\varepsilon_R$ à + 40° C supérieure ou égale à 2 daN/mm$^2$,
- un allongement à la rupture $\xi_R$ à + 20° C compris entre 250 et 500 %,
- une résistance à la déchirure amorcée Ra à + 20° C supérieure ou égale à 9 daN/mm d'épaisseur,
- une résistance à la rayure supérieure à 20 g mesurée d'après le test décrit par la suite,
- une résistance à l'abrasion avec un écart de flou inférieur à 4 % mesuré selon le test d'abrasion comme indiqué par la suite.

Sous un des aspects de l'invention une partie du composant polyol peut être remplacée par un produit à hydrogènes actifs différent tel une amine.

Suivant une autre réalisation de la couche de matière plastique selon l'invention le composant isocyanate peut contenir dans des proportions limitées, par exemple inférieures à environ 15 % en équivalents NCO, au moins un triisocyanate tels un biuret d'isocyante ou un triisocyanurate.

Pour remplir toutes les fonctions qui lui sont demandées, la couche de polyuréthane selon l'invention doit présenter une épaisseur généralement supérieure à 0,4 mm et de préférence supérieure à 0,5 mm.

La couche selon l'invention peut contenir divers additifs qui servent généralement à faciliter sa fabrication par coulée réactive. Elle peut contenir un catalyseur tel un catalyseur d étain par exemple le dibutyldilaurate d'étain l'oxyde de tributylétain l'octoate d'étain un catalyseur organomercurique par exemple l'esterphenylmercurique un catalyseur amine comme par exemple le diazabicyclo-(2,2,2)-octane, le 1,8-diazabicyclo (5,4,0)-1 decene-7. La couche peut contenir un stabilisant tel le bis (2,2,6,6-tétraméthyl-4-piperidyl) sebaçate, un antioxydant phénolique.

La couche peut contenir également un agent

nappant tel une résine silicone, un ester fluoroalkylé, une résine acrylique.

Des exemples de fabrication de vitrages feuilletés et de la couche de matière plastique utilisée pour cette fabrication sont décrits par la suite.

**Exemple 1**

Pour fabriquer la couche de matière plastique, on prépare au préalable le composant polyol en mélangeant un polytétraméthylène glycol de masse moléculaire 1000 (par exemple le produit commercialisé sous l'appellation Polymeg 1000 (marque déposée) par la société Quaker Oats, avec du butanediol-1,4, les proportions des deux constituants étant telles que le polytétraméthylèneglycol apporte 0,37 équivalent en groupes hydroxyles alors que le butanediol-1,4 en apporte 0,63.

Au composant polyol on incorpore un stabilisant à raison de 0,5 % en poids de la masse totale du composant polyol et du composant isocyanate, un agent nappant à raison de 0,05 % en poids calculé de la même façon et un catalyseur du dilaurate de dibutylétain à raison de 0,02 % en poids calculé de la même façon que précédemment.

Le composant isocyanate utilisé est du 3-isocyanatométhyl-3,5,5-triméthylcyclohexylisocyanate (IPDI) présentant des fonctions urées obtenues par hydrolyse partielle de l'IPDI et ayant une teneur en groupements NCO d'environ 31,5 % en poids.

Les composants sont pris en quantités telles que le rapport NCO/OH est de 1. Après dégazage sous vide des composants, le mélange porté à 40° C est coulé à l'aide d'une tête de coulée comme celle décrite dans la publication de brevet français 2 347 170, sur un support en verre mobile recouvert d'un agent de séparation. On forme ainsi une couche d'épaisseur homogène d'environ 0,755 mm d'épaisseur, que l'on soument à un cycle de polymérisation, c'est-à-dire à une température de 120° C durant 25 minutes environ.

Après polymérisation, la couche est retirée du support en verre et forme une feuille qui peut être stockée ou utilisée juste après pour la fabrication des vitrages feuilletés.

Pour fabriquer le vitrage on assemble la feuille de matière plastique avec une feuille de 2,6 mm d'épaisseur en verre recuit. Le verre peut éventuellement être durci ou trempé. Cet assemblage peut s'effectuer en deux étapes une première étape consistant en un essemblage préliminaire obtenu par passage des éléments constitutifs du vitrage entre deux rouleaux d'une calandreuse on peut utiliser à cet effet le dispositif décrit dans la publication du brevet européen 0 015 209 et une seconde étape consistant en une mise du produit feuilleté dans un autoclave où pendant une heure environ il subit une pression d'environ 10 bars à une température d'environ 135° C. Ce cycle d'autoclave peut être éventuellement remplacé par un cycle d'étuvage sans pression.

Le vitrage obtenu présente une excellente qualité optique et une transparence parfaite.

L'adhérc nce obtenue entre la feuille de verre et la couche de matière plastique est mesurée par un test de pelage décrit ci-dessous.

On découpe une bande de 5 cm de large sur la couche de recouvrement. On décolle l'extrémité de la bande sur laquelle on effectue une traction perpendiculaire à la surface de vitrage avec une vitesse de 5 cm par minute L'opération est réalisée à + 20° C. On note la force de traction moyenne nécessaire au décollement de la bande. En opérant ainsi on obtient une force de traction de 10 daN/5 cm.

Des essais de résistance au choc à différentes températures sont réalisés sur le vitrage fabriqué selon l'exemple.

Un premier essai de résistance au choc est effectué à + 20° C avec une bille d'acier d'un poids de 2,260 kg (test de la grosse bille) que l'on fait tomber sur la partie centrale d'un échantillon de vitrage feuilleté de 30,5 cm de côté maintenu sur un cadre rigide. On détermine la hauteur approximative, pour laquelle 90 % des échantillons testés à la température choisie resistent à la chute de bille sans être traversés.

Pour le vitrage feuilleté selon l'exemple la valeur obtenue est de 12 mètres.

Un autre essai de résistance au choc est effectué avec une bille d'acier de 0,227 kg et de 38 mm de diamètre. Un essai est réalisé à une température de - 20° C. Un autre essai est réalisé à une température de + 40° C. Les valeurs obtenues sont respectivement de 12 et de 11 mètres.

Compte tenu de la norme européenne R43 en vigueur, les résultats recherchés sont d'au moins 4 mètres à la grosse bille, d'au moins 8,5 mètres à la petite bille à - 20° C et d'au moins 9 mètres à la petite bille à + 40° C.

On mesure la résistance à la rayure par le test à la rayure connu sous l'appellation de "MAR résistant test" et qui est pratiqué avec l'appareil Erichsen, type 413. On mesure la charge à porter sur une tête diamantée pour introduire une rayure persistante sur la couche de matière plastique assemblée au support en verre. La charge doit être supérieure ou égale à 20 grammes pour que la couche de matière platique ait la propriété d'être autocicatrisable.

La résistance à la rayure mesurée selon ce test, pour le vitrage selon l'exemple est de 32 grammes.

On mesure la résistance à l'abrasion selon la norme européenne R43. A cet effet, on fait subir à un échantillon assemblé du vitrage une mesure avec un spectrophotomètre l'écart de flou entre entre la partie abrasée et la partie non abrasée. L'écart de flou (Δ flou) doit être inférieur à 4 % pour que la couche ait la qualité anti-abrasive.

La couche selon l'exemple présente un écart

de flou de 0,94 %.

Le vitrage selon l'exemple présente toutes les caractéristiques le rendant apte à l'utilisation en tant que pare-brise de véhicule.

**Exemple 2**

On opère de la même façon que dans l'exemple 1 sauf que le composant polyol est formé d'un mélange de polytétraméthylène glycol de masse moléculaire 1000, de butanediol-1,4, et polycaprolactonetriol (par exemple le produit commercialisé sous l'appellation Niax 301 (marque déposée), par la société Union Carbide) dans des proportions respectives telles que pour un équivalent d'hydroxyle au total, on utilise 0,35, 0,45 et 0,20 équivalent hydroxyle.

On fabrique une couche de 0,70 mm d'épaisseur. Le vitrage obtenu montre des caractéristiques mécaniques et optiques tout à fait satisfaisantes. Les valeurs mesurées aux différents tests sont les suivantes:

- une adhésion de 11 daN/5 cm, des valeurs de 8 mètres à la grosse bille, 11 et 11 mètres respectivement à la petite bille à-20° C et + 40° C.
- une résistance à la rayure de 35 g et un écart de flou à l'abrasion de 1,2 %.

La vitrage fabriqué, selon l'exemple, est donc apte à être utilisé en tant que pare-brise.

**Exemple 3**

On opère de la même façon que dans l'exemple 2 sauf que les proportions entre les différents polyols sont telles que pour un équivalent d'hydroxyle au total on utilise 0,35, 0,55 et 0,10 équivelent d'hydroxyle respectivement pour le polyol long le diol court et le triol.

On forme une couche de 0,66 mm d'épaisseur. Les valeurs mesurées aux différents tests sont les suivantes:

- une adhésion de 11 daN/5 cm, des valeurs de 10 à la grosse bille 13,5 et 13,5 mètres à la petite bille à - 20° C et + 40° C respectivement, une résistance à la rayure de 25 g, et un écart de flou à l'ebrasion de 1,2 %.

Le vitrage fabriqué selon l'exemple est donc apte à être utilisé en tant que pare-brise.

**Exemple 4**

On opère de la même façon que dans l'exemple 1 sauf qu'on effectue la polymérisation de la couche à une température de 60° C seulement, durant 20 heures.

Des essais de résistance aux chocs donnent une valeur à la petite bille à - 20° C de 6,5 mètres ce qui est insuffisant.

Cet exemple comparé à l'exemple 1 met en évidence l'influence de la température de polymérisation utilisée lors de la coulée réactive. Ici cette température est trop basse.

**Revendications**

1. Vitrage feuilleté comprenant uniquement une feuille de verre et une couche de matière plastique transparente, caractérisé en ce que la couche de matière plastique transparente présente des propriétés d'absorbeur d'énergie et de protection interne défínfi par une résistance à la rayure supérieure à 20 g mesurée avec l'appareil Erichsen type 413 et une résistance à l'abrasion selon la norme européenne R43 telle que l'écart de flou soit inférieur à 4 % et sous une épaisseur d'environ 0,5 mm une contrainte au seuil d'écoulement $\sigma_y$ à - 20° C inférieure ou égale à 3 daN/mm$^2$, une contrainte à la rupture $\sigma_R$ à + 20° C supérieure ou égale à 2 daN/mm$^2$, un allongement à la rupture $\varepsilon_R$ à + 20° C compris entre 250 et 500 %, une résistance à la déchirure amorcée $R_a$ à + 20° C supérieure ou égale à 9 daN/mm, et en ce que la couche de matière plastique est formée essentiellement d'un polyuréthane obtenu par coulée réactive en continu sur un support plan horizontal d'un mélange réactionnel d'un composant isocyanate et d'un composant polyol, le composant isocyanate comprenant au moins un diisocyanate aliphatique ou cycloaliphatique ou un prépolymère diisocyanate, ce composant ayant une viscosité mesurée à 40° C inférieure à environ 5 Pas, le composant isocyanate contenant des fonctions urées, le taux d'urée pouvant atteindre 10 % du poids total du composant isocyanate, de préférence ce taux d'urée étant compris entre 5 et 7 %, le composant polyol comprenant au moins un polyol long difonctionnel de masse moléculaire comprise entre 500 et 4000 et au moins un diol court en tant qu'agent d'allongement de chaîne le rapport des groupements équivalents isocyanates aux groupements équivalents hydroxyles est environ égal à 1, les proportions entre les différents polyols sont choisies telles que le nombre de groupements équivalents hydroxyles dus au diol court représente de 20 à 70 % du total des groupements hydroxyles.

2. Vitrage feuilleté comprenant uniquement une feuille de verre et une couche de matière plastique transparente, caractérisé en ce que la couche de matière plastique transparente présente des propriétés d'absorbeur d'énergie et de protection interne définie par une résistance à la rayure supérieure à 20 g mesurée avec l'appareil Erichsen type 413 et une résistance à l'abrasion selon la norme européenne R43 telle que l'écart de flou soit inférieur à 4 % et sous une épaisseur d'environ 0,5 mm une contrainte au seuil d'écoulement $\sigma_y$ à - 20° C inférieure ou égale à 3 daN/mm$^2$, une contrainte à la rupture $\sigma_R$ à + 20° C supérieure ou égale à 2 daN/mm$^2$, un

allongement à la rupture $\varepsilon_R$ à + 20° C compris entre 250 et 500 %, une résistance à la déchirure amorcée $R_a$ à + 20° C supérieure ou égale à 9 daN/mm, et en ce que la couche de matière plastique est formée essentiellement d'un polyuréthane obtenu par coulée réactive en continu sur un support plan horizontal d'un mélange réactionnel d'un composant isocyanate et d'un composant polyol, le composant isocyanate comprenant au moins un diisocyanate aliphatique ou cycloaliphatique ou un prépolymère diisocyanate, ce composant ayant une viscosité mesurée à 40° C inférieure à environ 5 Pas, le composant polyol comprenant au moins un polyol long difonctionnel de masse moléculaire comprise entre 500 et 4000 et au moins un diol court en tant qu'agent d'allongement de chaîne, au moins un polyol de fonctionnalité supérieure à 2, le rapport des groupements équivalents isocyanates aux groupements équivalents hydroxyles est environ égal à 1, les proportions entre les différents polyols sont choisies telles que le nombre de groupements équivalents hydroxyles dus au diol court représente de 20 à 70 % du total des groupements hydroxyles.

3. Vitrage feuilleté selon une des revendications 1 à 2, caractérisé en ce que le composant isocyanate comprend du 3-isocyanatométhyl-3,5,5-triméthylcyclohexylisocyanate.

4. Vitrage feuillé selon une des revendications 1 à 3, caractérisé en ce que le composant isocyanate est formé essentiellement de 3-isocyanatométhyl-3,5,5-triméthylcyclohexylisocyanate présentant des groupements urée et en ce que le composant polyol est formé essentiellement de polytétraméthylèneglycol et de butanediol-1,4.

5. Vitrage feuilleté selon une des revendications 2 à 4, caractérisé ce que le polyol de fonctionnalité supérieure à 2 est un polycaprolactonetriol.

6. Vitrage feuilleté selon une des revendications 1 à 5, caractérisé en ce que pour un équivalent d'hydroxyle au total, le polyol long représente 0,30 à 0,45 équivalent, le diol court 0,2 à 0,7 équivalent et le polyol de fonctionnalité supérieure à 2 de 0 à 0,35 équivalent.

7. Vitrage feuilleté selon une revendications 1 à 6, caractérisé en ce que la couche de polyuréthane ayant des propriétés d'absorbeur d'énergie et de protection interne comprend des additifs tel un catalyseur, un agent nappant, un stabilisant.

8. Vitrage feuilleté selon une des revendications 1 à 7, caractérisé en ce que la couche de matière plastique transparente est obtenue par une coulée réactive utilisant une température de polymérisation supérieure à 80° C.

9. Vitrage feuilleté selon une des revendications 1 à 8, caractérisé en ce que le composant isocyanate contient en outre au moins un triisocyanate.

**Patentansprüche**

1. Verbundglasscheibe bestehend aus nur einer Glasscheibe und einem transparenten Kunststoffüberzug, dadurch gekennzeichnet, daß der transparente Kunststoffüberzug energieabsorbierende Eigenschaften und innere Schutzeigenschaften, definiert durch eine Zugfestigkeit über 20 g gemessen mit dem Erichsen-Gerät Typ 413, und eine Abriebfestigkeit nach der europäischen Norm R 4.3. derart, daß die Trübungsabweichung unter 4 % liegt und bei einer Dicke von ungefähr 0,5 mm eine Fließschwellengrenze $\sigma_y \leqq = 3$ daN/mm² bei -20° C, eine Bruchgrenze $\sigma_R \geqq 2$ daN/mm² bei +20° C, eine Bruchdehnung $\varepsilon$ zwischen 250 und 500 % bei +20° C, einen Weiterreißwiderstand $R_a \geqq 9$ daN/mm bei +20° C aufweist und ferner dadurch, daß der Kunststoffüberzug in der Hauptsache aus einem Polyurethan besteht, erhalten durch auf einer ebenen, horizontalen Unterlage erfolgendes kontinuierliches Reaktionsgießen einer Reaktionsmischung aus einer Isocyanatkomponente und einer Polyolkomponente, wobei die Isocyanatkomponente wenigstens ein aliphatisches oder cycloaliphatisches Diisocyanat oder eine Vorstufe eines Diisocyanatpolymeren enthält und diese Komponente eine bei +40° C gemessene Viskosität unter ungefähr 5 Pas aufweist, die Isocyanatkomponente Harnstoffunktionen aufweist, wobei der Anteil des Harnstoffes 10 %, vorzugsweise zwischen 5 und 7 % des Gesamtgewichts der Isocyanatkomponente ausmacht, die Polyolkomponente wenigstens ein langkettiges difunktionelles Polyol mit einem Molekulargewicht zwischen 500 und 4 000 und wenigstens ein kurzkettiges Diol als Agens zur Kettenverlängerung enthält, wobei die Menge der äquivalenten Isocyanatgruppen zu den äquivalenten Hydroxylgruppen ungefähr gleich 1 ist, die Verhältnisse zwischen den verschiedenen Polyolen so gewählt sind, daß die Anzahl der äquivalenten Hydroxylgruppen bei den kurzkettigen Diolen 20 bis 70 % der Gesamtheit der Hydroxylgruppen ausmacht.

2. Verbundglasscheibe, bestehend aus nur einer Glasscheibe und einem transparenten Kunststoffüberzug, dadurch gekennzeichnet, daß der transparente Kunststoffüberzug energieabsorbierende Eigenschaften aufweist und innere Schutzeigenschaften, definiert durch eine Zugfestigkeit über 20 g, gemessen mit dem Erichsen-Gerät Typ 413, und eine Abriebfestigkeit nach der Europäischen Norm R 4.3., derart, daß die Trübungsabweichung unter 4 % liegt und bei einer Dicke von ungefähr 0,5 mm eine Fließschwellengrenze $\sigma_y \leqq 3$ daN/mm² bei -20° C, eine Bruchgrenze $\sigma_R \geqq 2$ daN/mm² bei +20° C, eine Bruchdehnung $\varepsilon_R$ zwischen 250 und 500 % bei +20° C, einen Weiterreißwiderstand $R_a \geqq 9$ daN/mm bei +20° C und ferner dadurch, daß der Kunststoffüberzug in der Hauptsache aus einem Polyurethan besteht, das erhalten wurde durch

auf einer ebenen, horizontalen Unterlage erfolgendes kontinuierliches Reaktionsgießen einer Reaktionsmischung aus einer Isocyanatkomponente und einer Polyolkomponente, wobei die Isocyanatkomponente wenigstens ein aliphatisches oder cycloaliphatisches Diisocyanat oder eine Vorstufe eines Diisocyanatpolymeren enthält und diese Mischung eine Viskosität, gemessen bei +40° C, von weniger als ungefähr 5 Pas aufweist, wobei die Polyolkomponente wenigstens ein langkettiges difunktionelles Polyol mit einem Molekulargewicht zwischen 500 und 4 000, wenigstens ein kurzkettiges Diol als Agens zur Kettenverlängerung, wenigstens ein Polyol mit einer über 2 liegenden Funktionalität enthält, wobei die Menge der äquivalenten Isocyanatgruppen zur Menge der äquivalenten Hydroxylgruppen ungefähr gleich 1 ist und die Verhältnisse der verschiedenen Polyole untereinander so gewählt sind, daß die Anzahl der äquivalenten Hydroxylgruppen bei den kurzen Diolen 20 bis 70 % der Gesamtmenge der Hydroxylgruppen ausmacht.

3. Verbundscheibe nach Anspruch 2, dadurch gekennzeichnet, daß die Isocyanatkomponente 3-Isocyanat-methyl-3,5,5-trimethylcyclohexylisocyanat ist.

4. Verbundscheibe nach einem der Ansprüche 1 bis 3, dadurch gekennzeichnet, daß die Isocyanatkomponente in der Hauptsache aus 3-Isocyanat-methyl-3,5,5-trimethylcyclohexylisocyanat mit Harnstoffgruppen besteht und daß die Polyolkomponente in der Hauptsache aus Polytetramethylenglykol und 1,4-Butandiol gebildet ist.

5. Verbundscheibe nach einem der Ansprüche 2 bis 4, dadurch gekennzeichnet, daß das Polyol mit der über 2 liegenden Funktionalität ein Polycaprolacton-triol ist.

6. Verbundscheibe nach einem der Ansprüche 1 bis 5, dadurch gekennzeichnet, daß für ein totales Hydroxyläquivalent das langkettige Polyol 0,30 bis 0,45 Äquivalente, das kurzkettige Polyol 0,2 bis 0,7 Äquivalente und das Polyol mit der über 2 liegenden Funktionalität 0 bis 0,35 Äquivalente ausmacht.

7. Verbundscheibe nach einem der Ansprüche 1 bis 8, dadurch gekennzeichnet, daß der Polyurethanüberzug mit den energieabsorbierenden Eigenschaften und den inneren Schutzeigenschaften Zusätze, wie einen Katalysator, ein Verlaufsmittel, einen Stabilisator enthält.

8. Verbundscheibe nach einem der Ansprüche 1 bis 7, dadurch gekennzeichnet, daß der transparente Kunststoffüberzug durch einen Reaktionsgießvorgang erhalten wird, bei dem eine Polymerisationstemperatur über 80° C zur Anwendung kommt.

9. Verbundscheibe nach einem der Ansprüche 1 bis 8, dadurch gekennzeichnet, daß die Isocyanatkompcnente außerdem wenigstens 1 ein Triisocyanat enthält.

## Claims

1. A laminated pane comprising only a glass sheet and a layer of transparent plastics material, characterised in that the layer of transparent plastics material has properties of absorption of energy and interior protection defined by a scratch resistance greater than 20 g measured with the Erichsen type 413 apparatus and an abrasion resistance according to European Standard R43 such that the haze difference is less than 4 % and at a thickness of about 0.5 mm a flow stress $\sigma_y$ at -20° C not exceeding 3 daN/mm$^2$, a rupture stress $\sigma_R$ at +20° C of at least 2 daN/mm$^2$, a lengthening at rupture $\varepsilon_R$ at +20° C from 250 % to 500 %, and a tear resistance Ra at +20° C of at least 9 daN/mm$^2$, and in that the layer of plastics material is formed essentially of a polyurethane obtained by continuous reactive casting on a flat horizontal support of a reaction mixture of an isocyanate component and a polyol component, the isocyanate component comprising at least one aliphatic or cycloaliphatic di-isocyanate or a di-isocyanate prepolymer, this component having a viscosity measured at +40° C less than about 5 Pas, the isocyanate component containing urea functions, the content of urea being up to 10 % of the total weight of isocyanate component, the urea content preferably being from 5 to 7 %, and the polyol component comprising at least one long difunctional polyol of molecular weight from 500 to 4000 and at least one short polyol as a chain lengthening agent, the ratio of isocyanate group equivalents to hydroxyl group equivalents is about 1, and the proportions between the different polyols are selected so that the number of hydroxyl group equivalents due to the short diol represents from 20 to 70 % of the total hydroxyl groups.

2. A laminated pane comprising only a glass sheet and a layer of transparent plastics material, characterised in that the layer of transparent plastics material has properties of absorption of energy and interior protection defined by a resistance to scratching greater than 20 g measured with the Erichsen type 413 apparatus and a resistance to abrasion according to European Standard R43 such that the difference in haze is less than 4 % and, at a thickness of about 0.5 mm, a flow stress $\sigma_y$ at -20° C not exceeding 3 daN/mm$^2$, a stress at rupture $\varepsilon_R$ at +20° C of at least 2 daN/mm$^2$, a lengthening at rupture $\xi_R$ at +20° C from 250 to 500 %, and a tear resistance at +20° C of at least 9 daN/mm, and in that the layer of plastics material is formed essentially of a polyurethane obtained by continuous reactive casting on a flat horizontal support of a reaction mixture of an isocyanate component and a polyol component, the isocyanate component comprising at least one aliphatic or cycloaliphatic di-isocyanate or a di-isocyanate prepolymer, this component having a viscosity measured at 40° C less than about 5 Pas, the polyol component comprising at least one

long difunctional polyol of molecular weight from 500 to 4000, at least one short diol as a chain lengthening agent and at least one polyol of functionality greater than 2, the ratio of isocyanate group equivalents to hydroxyl group equivalents is about 1, and the proportions between the different polyols are chosen such that the number of hydroxyl group equivalents due to the short diol represents from 20 to 70 % of the total hydroxyl groups.

3. A laminated pane according to claim 1 or 2, characterised in that the isocyanate component comprises 3-isocyanatomethyl-3,5,5-trimethylcyclohexylisocyanate.

4. A laminated pane according to any one of claims 1 to 3, characterised in that the isocyanate component is formed essentially of 3-isocyanatomethyl-3,5,5-trimethylcyclohexylisocyanate having urea groups and in that the polyol component is formed essentially of polytetramethylene glycol and 1,4-butanediol.

5. A laminated pane according to one of claims 2 to 4, characterised in that the polyol of functionality greater than 2 is a polycaprolactonetriol.

6. A laminated pane according to one of claims 1 to 5, characterised in that for one equivalent of hydroxyl groups in total, the long polyol represents 0.30 to 0.45 equivalent, the short diol 0.2 to 0.7 equivalent and the polyol of functionality greater than 2, 0 to 0.35 equivalent.

7. A laminated pane according to one of claims 1 to 6, characterised in that the polyurethane layer having properties of absorption of energy and interior protection comprises additives such as a catalyst, a spreading agent and a stabiliser.

8. A laminated pane according to any one of claims 1 to 7, characterised in that the layer of transparent plastics material is obtained by reactive casting using a polymerisation temperature greater than 80° C.

9. A laminated pane according to one of claims 1 to 8, characterised in that the isocyanate component further contains at least one tri-isocyanate.